# EUROPEAN PATENT SPECIFICATION

(11) **EP 2 722 503 B1**
(45) Date of publication and mention of the grant of the patent: **13.10.2021**
(21) Application number: 13188669.9
(22) Date of filing: 15.10.2013
(51) Int. Cl.: F01N 3/10, F01N 3/20, F02D 19/10

(54) **Exhaust gas thermal enhancer**
Abgaswärmeverstärker
Amplificateur thermique de gaz d'échappement

(30) Priority: 19.10.2012 FI 20126087
(43) Date of publication of application: 23.04.2014
(73) Proprietor: Dinex Finland Oy, 41330 Vihtavuori (FI)
(72) Inventor: Kanniainen, Kauko, 41340 Laukaa (FI); Matilainen, Pekka, 40520 Jyväskylä (FI)
(74) Representative: Berggren Oy

(56) References cited:
- EP-A1- 2 388 451
- WO-A1-2010/139875
- DE-A1-102007 053 130
- DE-U1- 20 218 811
- FR-A1- 2 891 007
- US-A1- 2006 021 332
- US-A1- 2011 173 953
- US-A1- 2012 225 752
- W Addy Majewski ET AL: "Methane Oxidation Catalysts", , 2 January 2012 (2012-01-02), pages 1-20, XP055666449, Retrieved from the Internet: URL:https://dieselnet.com/tech/catalyst_me thane_oxidation.php [retrieved on 2020-02-07]

## Description

### Background art

The invention relates to an exhaust gas thermal enhancer to be installed to gas pipe for increasing the temperature to start the reaction of removing methane from gas fluid in diesel engine exhaust gas or equivalent gas fluid. The invention also relates to a method for manufacturing and to a method to use such an exhaust gas thermal enhancer.

It has been very hard to minimise the quantity of emission of methane in diesel engine exhaust gas or equivalent waste gases. The problem is especially problematic in dual fuel targets. Oxidation of methane happens in catalyst when the temperature of gas is high enough, e.g. at least 300 to 360°C in methane catalyst(s). The problem has been long known but no-one has shown preferable and simple method to carry out the oxidation of methane in gas fluid.

In order to keep the methane emissions below the emission limits (like Euro V and VI) it is necessary to run dual fuel engines not having the above described invention just with diesel fuel when the exhaust gas temperature is below 350°C during idling and low load modes. This will diminish the usage of natural gas or bio-methane type alternative fuels causing an increase in operational cost of such an engine.

Publication DE 102007053130 A1 discloses an exhaust gas system that comprises an exhaust gas purification unit and a hot gas generator able to feed a hot gas into an exhaust gas line of the exhaust gas system. Publication US 2011/0173953 A1 discloses a system and a method for regenerating a device in an engine exhaust after-treatment system. Publication WO2010/139 875 A1 relates to an internal combustion engine having means for feeding at least two different fuels. The method comprises controlling the injection of the gas fuel into the cylinder only when a catalytic converter for oxidizing the unburnt products of the combustion of the gas fuel provided in the exhaust line has a temperature greater than or equal to a predetermined efficiency.

### Description of invention

The object of this invention is to provide an exhaust gas thermal enhancer and purification method, which substantially minimises the quantity of emission of methane in diesel engine exhaust gas or equivalent gas fluids.

To reach this object, the invention is characterised by features which are presented in the independent claims. The other claims present some advantageous embodiments of the invention.

An exhaust gas thermal enhancer TE comprises at least one front heater FOC for heating said gas fluid FLUID, and upstream to said front heater FOC there is at least one fuel injector FUI for injecting fuel FUEL and at least one fuel vaporizer VAP, which is a separate structure or integrated to said fuel injector FUI, and downstream to said front heater FOC there is at least one oxidation catalyst OC for catalyzing the oxidation of methane. Compared to normal this new invention gives essential advantages because it is now possible to oxidize methane in very economical and simple apparatus and method. It is now possible to minimize the quantity of emission of methane in diesel engine exhaust gas or equivalent gas fluids with very technically and economically simple apparatus and method. According to an object of the invention said front heater FOC is a front heating catalyst arranged to catalyze oxidation of components of added fuel FUEL and/or gas fluid FLUID. These are technically and economically very preferable and simply embodiments of this new invention. According to an object of the invention said fuel FUEL is diesel fuel, petrol, biofuel and/or dual fuel. These are preferable embodiments of this new invention. Typical amounts of added fuel FUEL are e.g. 5-25 g diesel fuel/min.

Purification device PD further comprises at least one fuel vaporizer VAP, which is a separate structure or integrated to said fuel injector FUI. According to an object of the invention said purification device PD further comprises at least one fuel mixer FUM, which is a separate structure or integrated to said fuel injector FUI or to said fuel vaporizer VAP.

According to an object of the invention said front heater FOC is arranged to oxidize diesel fuel. According to an object of the invention said front heater FOC is arranged to oxidize petrol or biofuel. These both are preferable embodiments of this new invention.

According to an object of the invention, said gas fluid FLUID comprises exhaust gas, e.g. exhaust gas from diesel engine or exhaust gas from petrol engine.

According to an object of the invention gas fluid FLUID comprises methane from dual fuel engines or burning equipment.

According to an object of the invention downstream to said oxidation catalyst OC there is at least one reducer injector REI of injecting reducing compounds such as ammonia, urea to gas fluid FLUID. According to an object of the invention downstream to said reducer injector REI there is at least one gas mixer MIX, which preferably shortens length of pipe(s). According to an object of the invention downstream to said oxidation catalyst OC there is at least one hydrolysis or SCR catalyst. These are preferable embodiments of this new invention.

According to an object of the invention an exhaust gas thermal enhancer TE according to any of claims is used for removing methane. According to an object of the invention the temperature of gas fluid FLUID is increased 100 to 200°C by front heater(s). According to an object of the invention amount of added fuel FUEL is adjusted so that the temperature of gas fluid FLUID is increased 100 to 200°C by front heater(s). According to an object of the invention amount of added fuel FUEL is adjusted so that the temperature of gas fluid FLUID is raised to 350 to 400°C in oxidation catalysts. These are important embodiments of this new invention.

By this new apparatus and method it is now possible to increase the temperature of fluid e.g. even by 200°C by front heater(s) in dual fuel systems. At same time the quantity of emissions of methane in engine exhaust gas are minimized so that EURO 5 and even EURO 6 limits are achieved.

### Detailed description of invention

Some of embodiments of the invention are described below in detail by making references to the enclosed drawings.
Figure 1 shows an exhaust gas thermal enhancer (TE) to be installed to gas pipe (PIP) for increasing exhaust gas temperature in gas fluid (FLUID)
Figure 2 shows another exhaust gas thermal enhancer (TE) to be installed to gas pipe (PIP) for increasing exhaust gas temperature in gas fluid (FLUID)

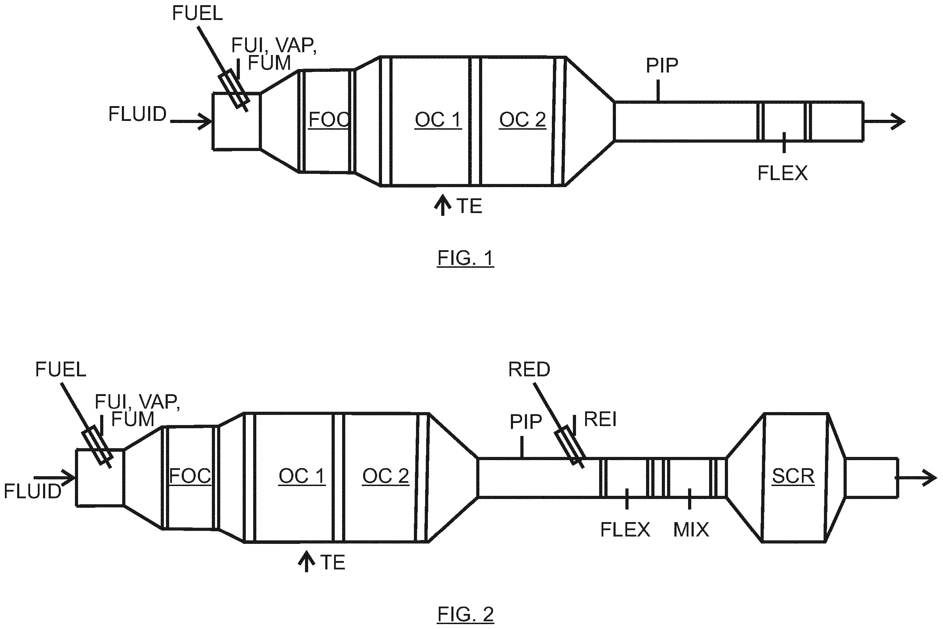

In figure 1 it is shown a gas thermal enhancer TE to be installed to gas pipe PIP for increasing exhaust gas temperature in gas fluid FLUID comprising methane. Said exhaust gas thermal enhancer TE comprises one front heater FOC for heating said gas fluid FLUID, and downstream to said front heater FOC there is two oxidation catalyst OC1, OC2 for catalyzing the oxidation of methane. Said gas thermal enhancer TE further comprises upstream to said front heater FOC one fuel injector FUI for injecting fuel FUEL. There is one fuel mixer FUM and one fuel vaporizer VAP integrated to said fuel injector FUI. In gas pipe PIP there is also a flexible connection part to make jointing technically preferable.

In figure 2 it is shown a gas thermal enhancer TE to be installed to gas pipe PIP for increasing exhaust gas temperature in gas fluid FLUID comprising methane. Said exhaust gas thermal enhancer TE comprises one front heater FOC for heating said gas fluid FLUID, and downstream to said front heater FOC there is two oxidation catalysts OC1, OC2 for catalyzing the oxidation of methane. Said gas thermal enhancer TE further comprises upstream to said front heater FOC one fuel injector FUI for injecting fuel FUEL. There is one fuel mixer FUM and one fuel vaporizer VAP integrated to said fuel injector FUI. In gas pipe PIP there is also a flexible connection part FLEX to make jointing technically preferable. Downstream to said oxidation catalysts OC1, OC2 there is one reducer injector REI of injecting reducing compounds RED, such as ammonia, urea to gas fluid FLUID. Thereafter there is preferably one gas mixer MIX and one hydrolysis or SCR catalyst to diversify the applicability of the apparatus.

## Claims

1. An exhaust gas thermal enhancer (TE) to be installed to gas pipe (PIP) for increasing the temperature in dual fuel systems to start the reaction of removing methane from gas fluid comprising exhaust gas or equivalent gas fluid (FLUID) comprising methane from a dual fuel engine, wherein said exhaust gas thermal enhancer (TE) comprises at least one front heater (FOC) for heating said gas fluid (FLUID) and upstream to said front heater (FOC) there is at least one fuel injector (FUI) for injecting fuel (FUEL) and at least one fuel vaporizer (VAP) is integrated to said fuel injector (FUI), and at least one fuel mixer (FUM) is integrated to said fuel injector (FUI) and to said vaporizer (VAP), and that downstream to said front heater (FOC) there is at least one oxidation catalyst (OC1, OC2) for catalyzing the oxidation of methane, wherein the front heater (FOC) is a front heating catalyst arranged to catalyze oxidation of components of injected fuel (FUEL) and/or gas fluid (FLUID), said gas fluid (FLUID) is arranged to flow through said front heater (FOC), and wherein amount of injected fuel (FUEL) is adjusted so that the temperature of the gas fluid (FLUID) is raised to 350-400 °C in oxidation catalyst(s) (OC1, OC2) for oxidation of methane.

2. An exhaust gas thermal enhancer (TE) according to claim 1, wherein said injected fuel (FUEL) comprises diesel fuel (DIE).

3. An exhaust gas thermal enhancer (TE) according to any of preceding claims, wherein said injected fuel (FUEL) comprises petrol or biofuel.

4. An exhaust gas thermal enhancer (TE) according to any of preceding claims, wherein said front heater (FOC) is arranged to oxidize dual fuel.

5. An exhaust gas thermal enhancer (TE) according to any of preceding claims, wherein downstream to said oxidation catalyst (OC1, OC2) there is at least one reducer injector (REI) of injecting reducing compounds (RED), such as ammonia, urea to gas fluid (FLUID).

6. An exhaust gas thermal enhancer (TE) according to claim 5, wherein downstream to said reducer injector (REI) there is at least one gas mixer (MIX).

7. An exhaust gas thermal enhancer (TE) according to any of preceding claims, wherein downstream to said oxidation catalyst (OC1, OC2) there is at least one hydrolysis or SCR catalyst.

8. A method for removing methane from gas fluid (FLUID) comprising methane from a dual fuel engine, wherein an exhaust gas thermal enhancer (TE) according to any of claims 1 to 7 is used for removing methane.

9. A method for removing methane according to claim 8, wherein the temperature of gas fluid (FLUID) is increased 100 to 200°C by said front heater(s) (FOC).

10. A method for removing methane according to claim 8 or 9, wherein an exhaust gas thermal enhancer (TE) according to any of claims 1 to 7 is controlled by a control unit (CONTR) of the dual fuel engine.

11. A method for removing methane according to any of claims 8 to 10, wherein an exhaust gas thermal enhancer (TE) according to any of claims 1 to 7 is used in a dual fuel engine.

## Patentansprüche

1. Abgaswärmeverstärker (TE), der in einer Gasleitung (PIP) installiert wird, um die Temperatur in Zweistoffsystemen zu erhöhen, um die Reaktion zur Entfernung von Methan aus einem Abgas enthaltenden Gasfluid oder einem gleichwertigen, Methan enthaltenden Gasfluid (FLUID) aus einem Zweistoffmotor zu starten, wobei der Abgaswärmeverstärker (TE) mindestens ein vorderes Heizelement (FOC) zum Erwärmen des Gasfluids (FLUID) aufweist und stromaufwärts des vorderen Heizelements (FOC) mindestens eine Kraftstoffeinspritzdüse (FUI) zum Einspritzen von Kraftstoff (FUEL) vorhanden ist und mindestens ein Kraftstoffverdampfer (VAP) in die Kraftstoffeinspritzdüse (FUI) integriert ist, und mindestens eine Kraftstoffmischvorrichtung (FUM) in die Kraftstoffeinspritzdüse (FUI) und den Verdampfer (VAP) integriert ist, und dass stromabwärts des vorderen Heizelements (FOC) mindestens ein Oxidationskatalysator (OC1, OC2) zum Katalysieren der Oxidation von Methan vorhanden ist, wobei das vordere Heizelement (FOC) ein vorderer Heizkatalysator ist, der so angeordnet ist, dass er die Oxidation von Komponenten des eingespritzten Kraftstoffs (FUEL) und/oder des Gasfluids (FLUID) katalysiert, wobei das Gasfluid (FLUID) so eingerichtet ist, dass es durch das vordere Heizelement (FOC) strömt, und wobei die Menge des eingespritzten Kraftstoffs (FUEL) so eingestellt wird, dass die Temperatur des Gasfluids (FLUID) in dem/den Oxidationskatalysator(en) (OC1, OC2) zur Oxidation von Methan auf 350-400 °C erhöht wird.

2. Abgaswärmeverstärker (TE) nach Anspruch 1, wobei der eingespritzte Kraftstoff (FUEL) Dieselkraftstoff (DIE) aufweist.

3. Abgaswärmeverstärker (TE) nach einem der vorhergehenden Ansprüche, wobei der eingespritzte Kraftstoff (FUEL) Benzin oder Biokraftstoff aufweist.

4. Abgaswärmeverstärker (TE) nach einem der vorhergehenden Ansprüche, wobei das vordere Heizelement (FOC) so eingerichtet ist, dass es zwei Kraftstoffe oxidiert.

5. Abgaswärmeverstärker (TE) nach einem der vorhergehenden Ansprüche, wobei stromabwärts des Oxidationskatalysators (OC1, OC2) mindestens eine Reduktions-Einspritzvorrichtung (REI) zum Einspritzen von reduzierenden Verbindungen (RED) wie z. B. Ammoniak, Harnstoff in das Gasfluid (FLUID) vorhanden ist.

6. Abgaswärmeverstärker (TE) nach Anspruch 5, wobei stromabwärts der Reduktions-Einspritzvorrichtung (REI) mindestens eine Gasmischvorrichtung (MIX) angeordnet ist.

7. Abgaswärmeverstärker (TE) nach einem der vorhergehenden Ansprüche, wobei stromabwärts des Oxidationskatalysators (OC1, OC2) mindestens ein Hydrolyse- oder SCR-Katalysator vorhanden ist.

8. Verfahren zur Entfernung von Methan aus einem Methan enthaltenden Gasfluid (FLUID) aus einem Zweistoffmotor, wobei ein Abgaswärmeverstärker (TE) nach einem der Ansprüche 1 bis 7 zur Entfernung von Methan verwendet wird.

9. Verfahren zur Entfernung von Methan nach Anspruch 8, wobei die Temperatur des Gasfluids (FLUID) durch das/die vordere(n) Heizelement(e) (FOC) um 100 bis 200°C erhöht wird.

10. Verfahren zur Entfernung von Methan nach Anspruch 8 oder 9, wobei ein Abgaswärmeverstärker (TE) nach einem der Ansprüche 1 bis 7 durch eine Steuereinheit (CONTR) des Zweistoffmotors gesteuert wird.

11. Verfahren zur Entfernung von Methan nach einem der Ansprüche 8 bis 10, wobei ein Abgaswärmeverstärker (TE) nach einem der Ansprüche 1 bis 7 in einem Zweistoffmotor verwendet wird.

## Revendications

1. Amplificateur thermique (TE) de gaz d'échappement destiné à être installé sur un tuyau de gaz (PIP) pour augmenter la température dans les systèmes bicarburants afin de démarrer la réaction d'enlèvement du méthane par rapport à un fluide gazeux qui comprend des gaz d'échappement ou par rapport à un fluide gazeux équivalent (FLUID) qui comprend du méthane en provenance d'un moteur bicarburant, dans lequel ledit amplificateur thermique (TE) de gaz d'échappement comprend au moins un moyen de chauffage avant (FOC) pour chauffer ledit fluide gazeux (FLUID) et, en amont dudit moyen de chauffage avant (FOC), il y a au moins un injecteur de carburant (FUI) pour injecter du carburant (FUEL), et au moins un vaporisateur de carburant (VAP) est intégré audit injecteur de carburant (FUI), et au moins un mélangeur de carburant (FUM) est intégré audit injecteur de carburant (FUI) et audit vaporisateur de carburant (VAP) et, en aval dudit moyen de chauffage avant (FOC), il y a au moins un catalyseur d'oxydation (OC1, OC2) pour catalyser l'oxydation du méthane, dans lequel le moyen de chauffage avant (FOC) est un catalyseur de chauffage avant qui est agencé pour catalyser l'oxydation de composants du carburant injecté (FUEL) et/ou du fluide gazeux (FLUID), ledit fluide gazeux (FLUID) est agencé de telle sorte qu'il s'écoule au travers dudit moyen de chauffage avant (FOC), et dans lequel la quantité de carburant injecté (FUEL) est réglée de telle sorte que la température du fluide gazeux (FLUID) soit augmentée jusqu'à 350 - 400 °C dans le(s) catalyseur(s) d'oxydation (OC1, OC2) pour l'oxydation du méthane.

2. Amplificateur thermique (TE) de gaz d'échappement selon la revendication 1, dans lequel ledit carburant injecté (FUEL) comprend du carburant diesel (DIE).

3. Amplificateur thermique (TE) de gaz d'échappement selon l'une quelconque des revendications précédentes, dans lequel ledit carburant injecté (FUEL) comprend de l'essence ou du biocarburant.

4. Amplificateur thermique (TE) de gaz d'échappement selon l'une quelconque des revendications précédentes, dans lequel ledit moyen de chauffage avant (FOC) est agencé pour oxyder le bicarburant.

5. Amplificateur thermique (TE) de gaz d'échappement selon l'une quelconque des revendications précédentes, dans lequel, en aval dudit catalyseur d'oxydation (OC1, OC2), il y a au moins un injecteur de réducteur (REI) pour injecter des composés réducteurs (RED), tels que l'ammoniac, l'urée, sur le fluide gazeux (FLUID).

6. Amplificateur thermique (TE) de gaz d'échappement selon la revendication 5, dans lequel, en aval dudit injecteur de réducteur (REI), il y a au moins un mélangeur de gaz (MIX).

7. Amplificateur thermique (TE) de gaz d'échappement selon l'une quelconque des revendications précédentes, dans lequel, en aval dudit catalyseur d'oxydation (OC1, OC2), il y a au moins un catalyseur d'hydrolyse ou SCR.

8. Procédé pour enlever le méthane d'un fluide gazeux (FLUID) qui comprend du méthane en provenance d'un moteur bicarburant, dans lequel un amplificateur thermique (TE) de gaz d'échappement selon l'une quelconque des revendications 1 à 7 est utilisé pour enlever le méthane.

9. Procédé pour enlever le méthane selon la revendication 8, dans lequel la température du fluide gazeux (FLUID) est augmentée de 100 à 200 °C par le(s)dit(s) moyen(s) de chauffage avant (FOC).

10. Procédé pour enlever le méthane selon la revendication 8 ou 9, dans lequel un amplificateur thermique (TE) de gaz d'échappement selon l'une quelconque des revendications 1 à 7 est commandé par une unité de commande (CONTR) du moteur bicarburant.

11. Procédé pour enlever le méthane selon l'une quelconque des revendications 8 à 10, dans lequel un amplificateur thermique (TE) de gaz d'échappement selon l'une quelconque des revendications 1 à 7 est utilisé dans un moteur bicarburant.
